# EUROPEAN PATENT SPECIFICATION

(11) **EP 0 930 275 B1**
(45) Date of publication and mention of the grant of the patent: **03.03.2004**
(21) Application number: 98124745.5
(22) Date of filing: 28.12.1998
(51) Int. Cl.: C03B 7/16

(54) **A delivery unit for delivering gobs of glass in a machine for forming glass articles**
Vorrichtung zur Speisung von Glasposten in eine Maschine zur Herstellung von Glasgegenständen
Unité de livraison de paraisons en verre dans une machine de fabrication d'articles en verre

(30) Priority: 13.01.1998 IT TO980004 U
(43) Date of publication of application: 21.07.1999
(73) Proprietor: BOTTERO S.p.A., 12010 Cuneo (IT)
(72) Inventor: Simondi, Carlo, 12010 Spinetta (IT); Basso, Gianpiero, 12081 Beinette (IT); Armando, Lorenzo, 12100 Cuneo (IT)
(74) Representative: Jorio, Paolo

(56) References cited:
- EP-A- 0 118 293
- EP-A- 0 480 642
- EP-A- 0 564 090
- EP-A- 0 658 518
- DE-A- 19 501 762

## Description

The present invention concerns a delivery unit for delivering gobs of glass in a machine for forming glass articles.

In the glass industry, it is known to utilise forming machines for the manufacture of glass articles, which machines include a plurality of aligned forming moulds, and a supply unit for supplying, a succession of gobs of glass to each mould. The supply unit includes a glass gob distributor and, for each forming mould, an associated glass gob delivery unit which receives the gobs of glass from the distributor and conveys them to the associated mould. The known gob delivery units include associated upper channels which extend fan-like from the distributor and have associated downwardly inclined rectilinear axes. Each gob delivery unit further includes an associated lower deflector which receives the gobs from the associated channel and conveys them to the corresponding mould. Since the moulds must be replaced on each change in production, and the glass gobs must always follow a predetermined path to the associated mould, each gob delivery unit has its own device for controlling the position of the outlet of the associated deflector with respect to the inlet of the associated mould mounted on the machine. Each control device usually includes a movable attachment member coupled with an end portion of the associated deflector, and two linear actuators located close to the associated mould and manually operated by an operator to move the attachment member in a horizontal plane along two orthogonal axes of a fixed frame of reference common to all the deflectors.

The use of a system of reference axes that is common to all deflectors, and the particular orientation of these axes themselves makes it relatively difficult to control the particular orientation of the various deflectors, both during the setting up of the machine, and after the mould changing operations following a production change. In fact, the control of the deflectors depends largely on the ability, the sensitivity and the knowledge of the operator, in that it requires a perfect combination of movements along the aforesaid two axes which consequently takes a relatively long time and thus requires the operator to remain in a hostile environment for relatively long periods of time, this obviously being costly.

Document EP-A1-0 480 642 discloses a delivery unit for conveying gobs of glass from a gob distributor to a mould, including an inclined rectilinear guide channel and a curved deflector for directing the glass gobs to the mould, and adjusting means for adjusting the position of the deflector. The adjusting means comprise a carriage movable along a transverse direction and provided with a slot wherein a fin of the outlet portion of the distributor slides. The carriage is also provided with an arm connected to the exit end of the guide channel, and carrying a screw and bolt assembly connected to deflector near its inlet portion to move the entire deflector along its entry axis.

Document EP-A2-0 658 518 discloses another delivery unit for conveying gobs of glass having a curved deflector supported in the machine by a hanger provided with a flexible member to allow adjustment of the deflector. The outlet portion of the deflector is provided with a bored lug fitting over a locating pin which is adjustable about x and y axes.

The object of the invention is to manufacture a gob delivery unit which overcomes the problems described above in a simple and economic manner.

According to the present invention, there is provided a glass gob delivery unit in a glass article forming machine having a forming mould selectable from a plurality of moulds, including a rectilinear guide channel having an inclined longitudinal axis, a curved deflector for vertically directing glass gobs to said mould, said deflector having an inlet portion located close to the outlet of said guide channel and an outlet portion facing said mould, said inlet portion being connected to an adjustable support device allowing said deflector to be adjusted along a path forming a projection of said longitudinal axis (8), and adjustment means for adjusting the position of said outlet portion according to the selected mould, said adjustment means including an attachment element coupled to said deflector, a first rectilinear guide arranged according a first direction perpendicular to a vertical plane comprising said longitudinal axis, and first actuator means connected to a first slider and operable for moving said attachment element along said first rectilinear guide, characterized in that said attachment element is coupled to said outlet portion, a second rectilinear guide being firmly connected to said first slider and arranged according a second direction lying in a vertical plane substantially parallel to the vertical plane comprising said longitudinal axis, a second slider carrying said attachment element, second actuator means being connected to said second slider and being operable for moving said attachment element along said second rectilinear guide.

The invention will now be described with reference to the accompanying drawings, which illustrate a non-limitative embodiment, in which:
Figure 1 is a side view of a preferred embodiment of gob delivery units according to the present invention, associated with a machine for forming glass articles;
Figure 2 is a view from above, on an enlarged scale, of a detail of Figure 1; and
Figure 3 illustrates a variant of some of the details of Figure 2.

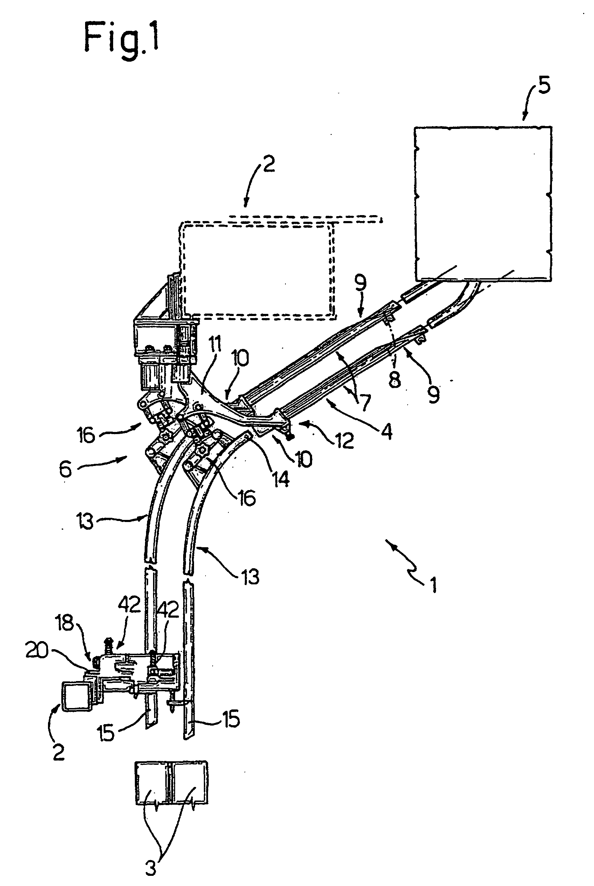

In Figure 1, the reference numeral 1 generally indicates a machine for the production of glass articles including a frame 2, a set of moulds 3 selectable from a plurality of sets of moulds for forming different articles, and a supply unit 4 for advancing a succession of glass gobs, not shown, towards each mould 3.

The unit 4 includes a gob distributor 5, known and not described in detail and, for each mould 3, a gob delivery unit 6 interposed between the distributor 5 and the associated mould 3 for guiding the gobs along a predetermined path.

Still with reference to Figure 1, each delivery unit 6, only two of which are visible in Figure 1, include associated upper inclined channels 7 having associated rectilinear longitudinal axes 8, which channels fan out from the distributor 5 to form respective non-zero angles with respect to a horizontal plane. Each channel 7 has an associated inlet portion 9 hinged, in known way, not illustrated, to the frame 2, and an associated outlet portion 10 supported by an associated bracket 11 fixed firmly to the frame 2, and with which is associated a device 12, known and not described in detail, for adjusting the angle of inclination of the associated channel 7.

Still with reference to Figure 1, each delivery unit 6 also includes an associated curved deflector 13 which receives the gobs of glass from the associated channel 7 and guides them into the associated mould 3. In particular, each deflector 13 has an inlet portion 14 located close to the outlet portion 10 of the associated channel 7, and an outlet portion 15 facing the associated mould 3, and is connected to the frame 2 by an associated adjustable support device, indicated 16, which, in the particular example described, allows the deflector 13 to be adjusted about a virtual axis substantially coincident with the axis 8 of the associated channel 7 and along a path forming a projection of the associated axis 8 itself.

Each delivery unit 6 also includes an associated position adjusting means or device 18, which is interposed between the frame 2 and the portion 15 of the associated deflector 13 to take and keep the portion 15 itself exactly in correspondence with an inlet aperture of the associated mould 3 mounted on the machine 1.

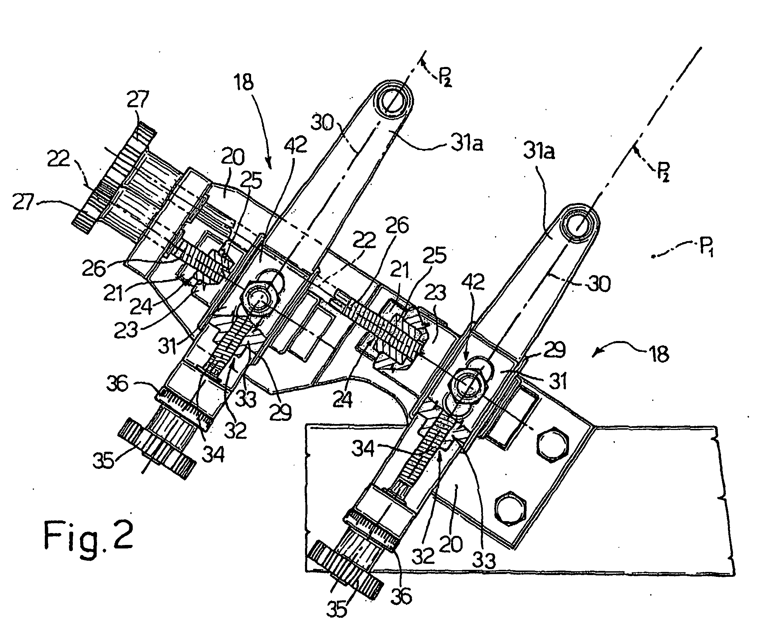

As shown in Figure 1 and, in particular, in Figure 2, each device 18 includes a frame 20 which, in the particular example described, is fixed to a frame 20 of an adjacent device 18 firmly fixed to the fixed frame 2 and, in turn, carries firmly connected thereto an associated first rectilinear guide 21 having an axis 22 orthogonal to a vertical plane comprising the axis 8 of the associated channel 7.

A slider 23 is slidably coupled to the guide 21, which slider is movable in opposite directions along the axis 22 under the thrust of a nut and lead screw bolt assembly 24, the nut 25 of which is firmly connected to the slider 23. The nut 25 is engaged by a lead screw 26 which is rotatably coupled to the frame 20 in an axially fixed position, and carries a control wheel 27 firmly connected at a terminal portion thereof.

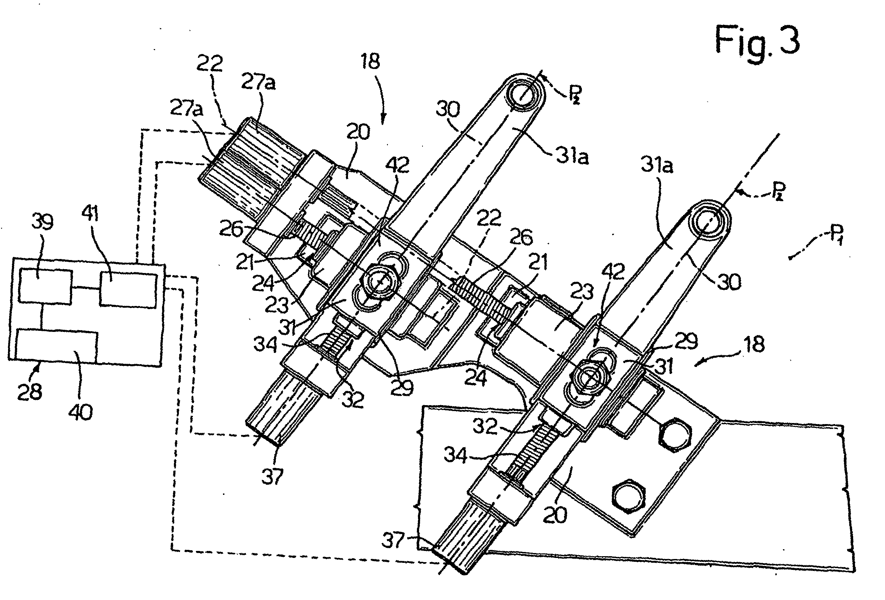

Alternatively, according to the embodiment illustrated in Figure 3, the bolt 26 is operated by an electric motor 27a controlled by a known electronic central control unit 28.

The slider 23 carries an associated second rectilinear guide 29 firmly connected thereto, the axis 30 of which is coincident with the line of intersection of a vertical plane P2 substantially parallel to the vertical plane in which the associated axis 8 lies, and a horizontal plane P1 parallel to the plane of Figure 2. A further slider 31 is coupled in axially slidable manner to the guide 29, which slider 31 is, in turn, coupled to the portion 15 of the associated deflector 13 by means of an attachment element 31a.

The slider 31 is movable in opposite directions along the associated guide 29 and with respect to the associated slider 23 under the thrust of an associated lead screw bolt assembly 32, the nut 33 of which is firmly connected to the slider 31 and is engaged by a lead screw 34 rotatably coupled to the associated guide 29 in an axially fixed position.

The screw 34 has firmly connected to a free end portion thereof, a control handwheel 35 and a graduated drum 36 which enables an operator to dispose the slider 31 in a plurality of positions, each of which corresponds to an optimal positioning of the associated portion 15 with respect to one of the selectable moulds 3.

Alternatively, as shown in Figure 3, the screw 34 is rotatable under the thrust of an electric motor 37 carried on the guide 29 and controlled by the central control unit 28. In the particular example described, the central control unit 28 includes a memory block 39 in which, for each deflector 13 and each of the associated moulds 3 there is stored an axial positioning value of the associated slider 31 along the associated guide 29 and, therefore, of the associated attachment element 31 a and the corresponding outlet portion 15 along the axis 30.

Still with reference to Figure 3, the central control unit 28 further includes a selector block 40 which, following a mould change, enables the operator to determine the kind of mould 3 mounted on the machine 1 and sends an appropriate inlet signal to the block 39, which generates an output corresponding to the optimal position of the slider 38. The central control unit 28 also includes a block 41 for controlling the motors 37, which receives the output emitted by the block 39 in response to an inlet signal from the block 40.

According to a further embodiment, not illustrated, the guide 29 extends along an inclined plane, and the associated axis 30 always lies in the plane P2 but forms, together with the horizontal plane, a non-zero angle that is, advantageously, substantially equal to the angle formed by the axis 8. In other words, each slider 31 is inclined so that the axis 8 of the associated channel 7 and the axis 30 along which the associated slider 31 moves are substantially parallel.

As can be seen in Figures 2 and 3, the guides 21 and 29 and the sliders 23 and 31 of each device 18 are locked together in a stack by an associated elastic locking device 42, known and not described in detail, which holds the sliders 23 and 31 in the various positions in which they are located following the adjustment.

From the above, it is clear that during the setting up stage of the machine 1, by acting on the handwheels 27 or the corresponding motors 27a, it is possible to move the sliders 23 along the associated guides 21 and, consequently, translate the axes 30 parallel to themselves until they intersect the inlet axis of the associated mould 3 mounted on the machine 1.

At this point, by rotating the handwheels 35 or operating the motors 37, it is possible to move the sliders 31 and, consequently, the portions 15 of the deflectors 13 connected thereto until the outlet portion 15 of each deflector 13 is brought exactly into correspondence with the inlet to the associated mould 3. These positions can be recorded by reading the graduated drums 36, or stored directly in the block 39 of the central control unit 28.

When; following the necessity for a production change, the moulds 3 are replaced with different moulds 3, the position of the deflectors 13 is controlled in accordance with the new moulds 3, by moving the sliders 31 only along the associated axes 30, while the sliders 23 are kept in their initial set-up positions. This is made possible by the fact that the moulds 3 which can be associated with a deflector 13 have associated inlets the axes of which always lie substantially on the same vertical plane parallel to the vertical plane of the axis 8 of the associated channel 7.

From the above, it therefore appears clear that, with respect to the known arrangements in which the control of the relative positions of mould and deflector had to be composed of two movements along two orthogonal axes, in each gob delivery unit 6 described, the adjustment occurs along a single rectilinear axis which adjustment requires, in the first place, extremely short operating times and time spent by the operator in a particularly hostile environment, and which is therefore, in any case, extremely simple and, in particular, helped by the fact that, by means of the graduated drums 36 or the central control unit 27, it is possible rapidly to move the outlet portion 15 of the deflectors 13 to respective predetermined axial positions or to positions stored beforehand, for example, during the mould change. In other words, in a different manner from the known method of operation, because of the devices 18 described, the operator no longer attempts to effect an adjustment based entirely on his experience and/or ability, but simply has to turn the wheels 35 by a predetermined amount utilising the associated graduated drums 36, or indicating to the central control unit 28 the kind of mould mounted on the machine following the mould change. In both cases, the deflectors 13 are automatically located in respective positions that are, in theory, optimal for operation.

At this point, the operator is required to make a simple check of the correct positioning, and a possible fine adjustment, which is necessary only if the deflectors 13 have different geometric characteristics from the initial or optimal characteristics, that is, when the deflectors 13 are in a state of permanent deformation or wear.

It is therefore clear that this entire additional adjustment becomes a control parameter of the operating state of the deflectors 13 and, in particular, is indicative of the necessity (or not) of providing maintenance or replacing the deflectors 13 themselves in order to maintain the quality of the articles which, as is known, depends on the path followed by the gobs introduced into the mould.

Finally, it is clear from the above that modifications and variations may be introduced to the delivery units 6 described, which do not depart from the field of protection of the present invention.

In particular, the sliders 23 and 31 could be moved along the associated guides 21 and 29 by different movement units from those described, and provided, for example, with linear motors. Furthermore, each device 18 could include a frame different from the frame of the device 18 adjacent thereto, and the deflectors 13 could be coupled to the frame 2 by support devices which enable different adjustments to be made from those described.

## Claims

1. A glass gob delivery unit (6) in a glass article forming machine (1) having a forming mould (3) selectable from a plurality of moulds (3), including a rectilinear guide channel (7) having an inclined longitudinal axis (8), a curved deflector (13) for vertically directing glass gobs to said mould (3), said deflector (13) having an inlet portion (14) located close to the outlet of said guide channel (7) and an outlet portion (15) facing said mould (3), said inlet portion (14) being connected to an adjustable support device (16) allowing said deflector (13) to be adjusted along a path forming a projection of said longitudinal axis (8), and adjustment means (18) for adjusting the position of said outlet portion (15) according to the selected mould (3), said adjustment means (18) including an attachment element (31a) coupled to said deflector (13), a first rectilinear guide (21) arranged according a first direction (22) perpendicular to a vertical plane comprising said longitudinal axis (8), and first actuator means (24, 27; 24, 27a) connected to a first slider (23) and operable for moving said attachment element (31a) along said first rectilinear guide (21), **characterized in that** said attachment element (31a) is coupled to said outlet portion (15), a second rectilinear guide (29) being firmly connected to said first slider (23) and arranged according a second direction (30) lying in a vertical plane (P2) substantially parallel to the vertical plane comprising said longitudinal axis (8), a second slider (31) carrying said attachment element (31a), second actuator means (32, 35; 32, 37) being connected to said second slider (31) and being operable for moving said attachment element (31a) along said second rectilinear guide (29).

2. A glass gob delivery unit according to Claim 1, **characterized in that** said second direction (30) lies in a substantially horizontal plane (P1).

3. A glass gob delivery unit according to Claim 1, **characterized in that** said second direction (30) forms a non-zero angle with a horizontal plane (P1).

4. A glass gob delivery unit according to Claim 3, **characterized in that** said second direction (30) is substantially parallel to said longitudinal axis (8).

5. A glass gob delivery unit according to any previous Claim, **characterized in that** said first actuator means (24, 27; 24, 27a) include a first lead screw bolt assembly (24) and an associated first control member (27, 27a), said second actuator means (32, 35; 32, 37) including a second lead screw and bolt assembly (32) and an associated second control member (35, 37).

6. A glass gob delivery unit according to Claim 5, **characterized in that** each one of said control members include a corresponding manually operable control wheel (27, 35), at least the control wheel (35) included by said second control member being associated to a graduate drum (36) enabling the operator to locate said second slider (31) in a predetermined selected position.

7. A glass gob delivery unit according to Claim 5, **characterized in that** at least said second control member include an electric motor (37) operable under the control of an electronic central control unit (28).

8. A glass gob delivery unit according to Claim 7, **characterized in that** said central control unit (28) includes storage means (39) storing a value corresponding to an optimal position of said attachment element (31a) for each said mould (3), selection means (40) connected to said storage means (39), and a control block (41) adapted to control said electric motor (37) in response to the value selected in said storage means (39).

9. A machine for forming glass articles including a supply unit (4) for supplying glass gobs to a series of moulds (3) selectable from a plurality of series of moulds, **characterized in that** said supply unit (4) includes a plurality of said glass gob delivery units (6), each formed according to any previous Claim.

10. A machine for forming glass articles according to Claim 9, **characterized in that** each one of said delivery units (6) according to claim 8 includes corresponding adjustable means (18) provided with corresponding frames (20) firmly connected to each other, said first control member of each said delivery unit (6) including a corresponding electric motor (27a), the control block (41) of said control unit (28) being adapted to control both said electric motors (27 a, 37) of each said delivery unit (6), and said storage means (39).

## Patentansprüche

1. Glastropfen-Zuführeinheit (6) in einer Glasartikel-Formgebungsmaschine (1), die eine aus einer Mehrzahl von Formen (3) auswählbare Formgebungsform (3) hat, aufweisend: einen geradlinigen Führungskanal (7) mit einer geneigten Längsachse (8), ein gekrümmtes Umlenkteil (13) zum vertikalen Führen von Glastropfen zur Form (3), wobei das Umlenkteil (13) einen Einlassabschnitt (14), der sich nahe dem Auslass des Führungskanals (7) befindet, und einen Auslassabschnitt (15) aufweist, der der Form (3) zugewandt ist, wobei der Einlassabschnitt (14) mit einer verstellbaren Haltevorrichtung (16) gekuppelt ist, die ein Verstellen des Umlenkteils (13) entlang einer eine Verlängerung der Längsachse (8) bildenden Bahn ermöglicht, und ein Verstellmittel (18) zum Verstellen der Position des Auslassabschnitts (15) gemäß der ausgewählten Form (3), wobei das Verstellmittel (18) ein Befestigungselement (31a), das mit dem Umlenkteil (13) gekuppelt ist, eine erste Linearführung (21), die gemäß einer ersten Richtung (22) angeordnet ist, die senkrecht zu einer die Längsachse (8) aufweisenden Vertikalebene ist, und erste Betätigungsmittel (24, 27; 24, 27a) aufweist, die mit einem ersten Gleitstück (23) gekuppelt sind und die betreibbar sind, um das Befestigungselement (31a) entlang der ersten Linearführung (21) zu bewegen, **dadurch gekennzeichnet, dass** das Befestigungselement (31a) mit dem Auslassabschnitt (15) gekuppelt ist, wobei eine zweite Linearführung (29) fest mit dem ersten Gleitstück (23) verbunden ist und gemäß einer zweiten Richtung (30) angeordnet ist, die in einer Vertikalebene (P2) liegt, die im Wesentlichen parallel zur die Längsachse (8) aufweisenden Vertikalebene ist, wobei ein zweites Gleitstück (31) das Befestigungselement (31a) trägt, und wobei zweite Betätigungsmittel (32, 35; 32, 37) mit dem zweiten Gleitstück (31) gekuppelt sind und betreibbar sind, um das Befestigungselement (31a) entlang der zweiten Linearführung (29) zu bewegen.

2. Glastropfen-Zuführeinheit gemäß Anspruch 1, **dadurch gekennzeichnet, dass** die zweite Richtung (30) in einer im Wesentlichen horizontalen Ebene (P1) liegt.

3. Glastropfen-Zuführeinheit gemäß Anspruch 1, **dadurch gekennzeichnet, dass** die zweite Richtung (30) mit einer horizontalen Ebene (P1) einen Winkel bildet, der ungleich Null ist.

4. Glastropfen-Zuführeinheit gemäß Anspruch 3, **dadurch gekennzeichnet, dass** die zweite Richtung (30) im Wesentlichen parallel zur Längsachse (8) ist.

5. Glastropfen-Zuführeinheit gemäß irgendeinem vorhergehenden Anspruch, **dadurch gekennzeichnet, dass** die ersten Betätigungsmittel (24, 27; 24, 27a) eine erste Leitspindelbolzen-Vorrichtung (24) und ein dazugehöriges erstes Steuerteil (27, 27a) aufweisen, wobei die zweiten Betätigungsmittel (32, 35; 32, 37) eine zweite Leitspindel- und Bolzen-Vorrichtung (32) und ein dazugehöriges zweites Steuerteil (35, 37) aufweisen.

6. Glastropfen-Zuführeinheit gemäß Anspruch 5, **dadurch gekennzeichnet, dass** jedes der Steuerteile ein zugeordnetes, manuell betätigbares Stellrad (27, 35) aufweist, wobei zumindest das beim zweiten Steuerteil inbegriffene Stellrad (35) mit einer Skalentrommel (36) verbunden ist, die es dem Bediener ermöglicht das zweite Gleitstück (31) in einer vorbestimmten Auswahlposition zu positionieren.

7. Glastropfen-Zuführeinheit gemäß Anspruch 5, **dadurch gekennzeichnet, dass** zumindest das zweite Steuerteil einen Elektromotor (37) aufweist, der unter der Steuerung einer elektronischen Zentralsteuereinheit (28) betreibbar ist.

8. Glastropfen-Zuführeinheit gemäß Anspruch 7, **dadurch gekennzeichnet, dass** die Zentralsteuereinheit (28) Speichermittel (39) aufweist, die für jede Form (3) einen einer Optimalposition des Befestigungselements (31a) entsprechenden Wert speichern, wobei Auswahlmittel (40) mit dem Speichermittel (39) gekoppelt sind, wobei ein Steuerblock (41) angepasst ist, um den Elektromotor (37) in Reaktion auf den im Speichermittel (39) ausgewählten Wert zu steuern.

9. Maschine zum Formen von Glasartikeln, die eine Versorgungseinheit (4) zum Liefern von Glastropfen an eine Serie von Formen (3) aufweist, die aus einer Mehrzahl von Formenserien auswählbar ist, **dadurch gekennzeichnet, dass** die Versorgungseinheit (4) eine Mehrzahl von Glastropfen-Zuführeinheiten (6) aufweist, die jeweils gemäß irgendeinem vorhergehenden Anspruch ausgebildet sind.

10. Maschine zum Formen von Glasartikeln gemäß Anspruch 9, **dadurch gekennzeichnet, dass** jede der Zuführeinheiten (6) gemäß Anspruch 8 zugeordnete Verstellmittel (18) aufweist, die mit zugeordneten Rahmen (20) versehen sind, die fest miteinander verbunden sind, wobei das erste Steuerteil jeder Zuführeinheit (6) einen zugeordneten Elektromotor (27a) aufweist, wobei der Steuerblock (41) jeder Steuereinheit (28) angepasst ist, um sowohl die Elektromotoren (27a, 37) jeder Zuführeinheit (6) als auch das Speichermittel (39) zu steuern.

## Revendications

1. Unité d'acheminement de gouttes de verre (6) dans une machine de formage d'article en verre (1) ayant un moule de formage (3) pouvant être sélectionné parmi une pluralité de moules (3), comportant un canal de guidage rectiligne (7) ayant un axe longitudinal incliné (8), un déflecteur incurvé (13) pour diriger verticalement des gouttes de verre vers ledit moule (3), ledit déflecteur (13) ayant une partie d'entrée (14) située à proximité de la sortie dudit canal de guidage (7) et une partie de sortie (15) faisant face audit moule (3), ladite partie d'entrée (14) étant connectée à un dispositif de support ajustable (16) permettant audit déflecteur (13) d'être ajusté le long d'un trajet formant une projection dudit axe longitudinal (8), et des moyens d'ajustement (18) pour ajuster la position de ladite partie de sortie (15) selon le moule sélectionné (3), lesdits moyens d'ajustement (18) comportant un élément de fixation (31a) couplé audit déflecteur (13), un premier guide rectiligne (21) agencé selon une première direction (22) perpendiculaire à un plan vertical comportant ledit axe longitudinal (8), et des premiers moyens actionneurs (24, 27 ; 24, 27a) connectés à un premier coulisseau (23) et pouvant être actionnés pour déplacer ledit élément de fixation (31a) le long dudit premier guide rectiligne (21), **caractérisée en ce que** ledit élément de fixation (31a) est couplé à ladite partie de sortie (15), un second guide rectiligne (29) étant fermement connecté audit premier coulisseau (23) et agencé selon une seconde direction (30) s'étendant dans un plan vertical (P2) sensiblement parallèle au plan vertical comportant ledit axe longitudinal (8), un second coulisseau (31) portant ledit élément de fixation (31a), des seconds moyens actionneurs (32, 35 ; 32, 37) étant connectés audit second coulisseau (31) et pouvant être actionnés pour déplacer ledit élément de fixation (31a) le long dudit second guide rectiligne (29).

2. Unité d'acheminement de gouttes de verre selon la revendication 1, **caractérisée en ce que** ladite seconde direction (30) s'étend dans un plan sensiblement horizontal (P1).

3. Unité d'acheminement de gouttes de verre selon la revendication 1, **caractérisée en ce que** ladite seconde direction (30) forme un angle non nul avec un plan horizontal (P1).

4. Unité d'acheminement de gouttes de verre selon la revendication 3, **caractérisée en ce que** ladite seconde direction (30) est sensiblement parallèle audit axe longitudinal (8).

5. Unité d'acheminement de gouttes de verre selon l'une quelconque des revendications précédentes, **caractérisée en ce que** lesdits premiers moyens actionneurs (24, 27 ; 24, 27a) comportent un premier ensemble de vis-mère avec écrou (24) et un premier élément de commande associé (27, 27a), lesdits seconds moyens actionneurs (32, 35 ; 32, 37) comportant un second ensemble de vis-mère avec écrou (32) et un second élément de commande associé (35, 37).

6. Unité d'acheminement de gouttes de verre selon la revendication 5, **caractérisée en ce que** chacun desdits éléments de commande comporte une roue de commande correspondante pouvant être actionnée manuellement (27, 35), au moins la roue de commande (35) dudit second élément de commande étant associée à un tambour gradué (36) permettant à l'opérateur de positionner ledit second coulisseau (31) dans une position sélectionnée prédéterminée.

7. Unité d'acheminement de gouttes de verre selon la revendication 5, **caractérisée en ce qu'**au moins ledit second élément de commande inclut un moteur électrique (37) pouvant être actionné sous la commande d'une unité de commande centrale électronique (28).

8. Unité d'acheminement de gouttes de verre selon la revendication 7, **caractérisée en ce que** ladite unité de commande centrale (28) comporte des moyens de mémorisation (39) mémorisant une valeur correspondant à une position optimale dudit élément de fixation (31a) pour chaque moule (3), des moyens de sélection (40) connectés auxdits moyens de mémorisation (39), et un bloc de commande (41) adapté pour commander ledit moteur électrique (37) en réponse à la valeur sélectionnée dans lesdits moyens de mémorisation (39).

9. Machine pour former des articles en verre, comportant une unité d'alimentation (4) pour amener des gouttes de verre à une série de moules (3) pouvant être sélectionnée parmi une pluralité de séries de moules, **caractérisée en ce que** ladite unité d'alimentation (4) comporte une pluralité desdites unités d'acheminement de gouttes de verre (6) formées chacune selon l'une quelconque des revendications précédentes.

10. Machine pour former des articles en verre selon la revendication 9, **caractérisée en ce que** chacune desdites unités d'acheminement (6) selon la revendication 8 comporte des moyens ajustables correspondants (18) munis de châssis correspondants (20) fermement connectés les uns aux autres, ledit premier élément de commande de chaque unité d'acheminement (6) comportant un moteur électrique correspondant (27a), le bloc de commande (41) de ladite unité de commande (28) étant adapté pour commander aussi bien lesdits moteurs électriques (27a, 37) de chaque unité d'acheminement (6) que lesdits moyens de mémorisation (39).
